# EUROPÄISCHE PATENTSCHRIFT

(11) **EP 1 181 127 B1**
(45) Veröffentlichungstag und Bekanntmachung des Hinweises auf die Patenterteilung: **26.05.2004**
(21) Anmeldenummer: 00926782.4
(22) Anmeldetag: 31.03.2000
(51) Int. Cl.: B23K 11/24, B23K 11/25

(54) **VERFAHREN ZUM WIDERSTANDSSCHWEISSEN**
RESISTANCE WELDING METHOD
PROCEDE DE SOUDAGE ELECTRIQUE PAR RESISTANCE

(30) Priorität: 20.05.1999 DE 19923172
(43) Veröffentlichungstag der Anmeldung: 27.02.2002
(73) Patentinhaber: Karakas, Erdogan, 30938 Burgwedel (DE)
(72) Erfinder: Karakas, Erdogan, 30938 Burgwedel (DE)
(74) Vertreter: Wagner, Carsten
(86) Internationale Anmeldenummer: PCT/EP2000/002841
(87) Internationale Veröffentlichungsnummer: WO 2000/059673

(56) Entgegenhaltungen:
- EP-A- 0 835 713
- DE-C- 4 440 351
- US-A- 4 409 461

## Beschreibung

Die Erfindung betrifft ein Verfahren der im Oberbegriff des Anspruchs 1 genannten Art zum Widerstandsschweißen.

Beim Widerstandsschweißen mit Gleichstrom werden die Schweißelektroden ungleichmäßig erwärmt, wobei die Schweißelektrode mit der positiven Polarität wärmer wird als die Schweißelektrode mit der negativen Polarität. Dies ist auf Peltier-Wärme und Joulesche Wärme zurückzuführen. Eine einseitige Erwärmung der positiv gepolten Elektrode verursacht eine Verringerung der Standzeit bzw. Standmenge dieser Elektrode. Dies trifft insbesondere dann zu, wenn Material mit hoher Wärmeleitfähigkeit, beispielsweise Aluminium, geschweißt werden.

Zur Vermeidung dieser Nachteile ist es bekannt, Wechselstrom zum Schweißen einzusetzen.

Ein Verfahren und eine Vorrichtung zum Widerstandsschweißen mit Wechselstrom sind durch DE 41 13 117 C1 bekannt. Bei diesem Verfahren werden auf der primären Seite eines Schweißtransformators zuerst eine Folge positiver Mittelfrequenz-Stromimpulse und anschließend eine Folge negativer Mittelfrequenz-Stromimpulse erzeugt und den sekundärseitig an den Transformator angeschlossenen Schweißelektroden zugeführt, so daß der Schweißstrom ein Wechselstrom ist. Ein Nachteil des bekannten Verfahrens besteht darin, daß der Schweißtransformator nicht nur die Mittelfrequenz-Stromimpulse, sondern auch den resultierenden Strom mit niedriger Frequenz übertragen muß, da der Schweiß-Wechselstrom auf der primären Seite des Transformators gewonnen wird. Der hierfür erforderliche Schweißtransformator ist groß und schwer sowie teuer in der Herstellung. Prinzipbedingt kann der Schweiß-Wechselstrom bei der bekannten Vorrichtung keine rechteckige Kurvenform haben, da das Übertragungsverhalten des Schweißtransformators eine solche Kurvenform nicht zuläßt.

Ähnliche Vorrichtungen sind durch DE 30 05 083 C2 und EP 0 261 328 A1 bekannt.

Durch DE 44 40 351 C1 ist ein Verfahren der im Oberbegriff des Anspruchs 1 genannten Art zum Widerstandsschweißen bekannt, bei dem zur Erzeugung eines Schweiß-Wechselstroms eine an den Schweißelektroden anliegende Gleichspannung umgepolt wird, so daß im Ergebnis ein Wechselstrom erzeugt ist, dessen positive und negative Halbwelle im wesentlichen rechteckförmig sind. Nach den Angaben in der Druckschrift soll hierdurch vermieden werden, daß sich die Schweißlinse zu der wärmeren, positiven Elektrode hin verschoben bildet und damit zu einer Kontaktebene, in der die zu verschweißenden Werkstücke aneinander anliegen, unsymmetrisch ist, was die Festigkeit der Schweißverbindung beeinträchtigt. Außerdem soll durch das aus der Druckschrift bekannte Verfahren eine ungleichmäßige Abnutzung der Schweißelektroden vermieden werden, die zu einer Verringerung der Standzeiten bzw. Standmengen der Elektroden führt.

Eine Vorrichtung zur Durchführung des aus der DE 44 40 351 C1 bekannten Verfahrens ist durch DE 295 08 868 U1 bekannt.

Durch US-A-4 409 461 ist ein Verfahren zum Widerstandsschweißen von Nägeln in einer automatischen Nagelmaschine bekannt, bei dem eine Mehrzahl von Nägeln den Schweißelektroden einer Schweißanlage mittels einer Drehscheibe zugeführt und an ein Paar von Drähten angeschweißt wird. Bei dem bekannten Verfahren wird eine an den Schweißelektroden anliegende Gleichspannung vor jedem Schweißvorgang ungesteuert umgepolt.

Der Erfindung liegt die Aufgabe zugrunde, ein Verfahren der im Oberbegriff des Anspruchs 1 genannten Art anzugeben, bei dem hohe Standzeiten bzw. Standmengen der Elektroden erzielbar sind und das einfach durchführbar ist.

Diese Aufgabe wird durch die im Anspruch 1 angegebene Lehre gelöst.

Erfindungsgemäß wird die Polarität der Gleichspannung an den Schweißelektroden vor oder nach jedem Schweißvorgang durch Steuermittel in Abhängigkeit von wenigstens einem während des Schweißprozesses ermittelten Parameter gewählt. Unter einem Schweißvorgang wird erfindungsgemäß der Vorgang verstanden, bei dem eine Schweißverbindung zwischen den zu verschweißenden Werkstükken, also ein schweißpunkt oder eine Schweißnaht, erzeugt wird.

Ergibt beispielsweise eine Messung der Temperatur der beiden Schweißelektroden, die nachfolgend kurz als Elektroden bezeichnet werden, daß sich die positive Elektrode stärker erwärmt hat als die negative Elektrode und daß der Temperaturunterschied zwischen den beiden Elektroden einen vorgegebenen Wert überschreitet, so wird die Gleichspannung an den Elektroden vor dem nächsten Schweißvorgang, also beispielsweise vor der Erzeugung des nächsten Schweißpunktes, umgepolt, so daß sich dann die zunächst negativ gepolte und nunmehr positiv gepolte Elektrode stärker erwärmt.

Es hat sich überraschend gezeigt, daß sich mit dem erfindungsgemäßen Verfahren die Standzeit bzw. Standmenge der Elektroden wesentlich erhöhen läßt, ohne daß eine Umpolung während des Schweißvorganges, wie sie aus der DE 44 40 351 C1 bekannt ist, erforderlich ist.

Durch das erfindungsgemäße Verfahren läßt sich eine gleichmäßige Abnutzung der Elektroden erzielen. Dies verhindert vorzeitigen Verschleiß und verringert Rüstzeiten, die durch den Austausch der Elektroden verursacht sind. Auf diese Weise wird der Schweißprozeß kostengünstiger gestaltet. Darüber hinaus ist das erfindungsgemäße Verfahren einfach und mit geringem apparativem Aufwand durchführbar.

Die Ermittlung wenigstens eines Parameters des Schweißprozesses umfaßt sowohl eine Ermittlung des Parameters oder der Parameter während des Schweißvorganges, also beispielsweise während der Erzeugung eines Schweißpunktes, als auch die Ermittlung des Parameters oder der Parameter vor oder nach dem eigentlichen Schweißvorgang. So ist es beispielsweise möglich, die Temperatur der Schweißelektroden vor dem Schweißvorgang, während des Schweißvorganges oder nach dem Schweißvorgang zu ermitteln. Es ist auch möglich, wenigstens einen Parameter während des Schweißvorganges zu ermitteln und wenigstens einen weiteren Parameter vor bzw. nach dem Schweißvorgang.

Eine Weiterbildung der erfindungsgemäßen Lehre sieht vor, daß wenigstens ein Parameter des Schweißprozesses gemessen und zur Wahl der Polarität der Gleichspannung an den Elektroden herangezogen wird. Bei dieser Ausführungsform erfolgt die Wahl der Polarität somit in Abhängigkeit von einem gemessenen Parameter des Schweißprozesses. Der oder die Parameter können erfindungsgemäß während des Schweißvorganges, also beispielsweise beim Erzeugen eines Schweißpunktes, gemessen werden. Sie können jedoch auch vor und/oder nach dem Schweißvorgang gemessen werden.

Gemäß einer anderen Weiterbildung wird aus wenigstens zwei gemessenen Parametern des Schweißprozesses ein weiterer Parameter errechnet und zur Wahl der Polarität der Gleichspannung an den Schweißelektroden herangezogen. Bei dieser Ausführungsform können somit zur Wahl der Polarität nicht nur gemessene Parameter, sondern auch von den gemessenen Parametern abgeleitete Parameter herangezogen werden.

Erfindungsgemäß können beliebige geeignete Parameter des Schweißprozesses als Grundlage für die Wahl der Polarität vor bzw. nach jedem Schweißvorgang herangezogen werden. Vorzugsweise umfassen die Parameter des Schweißprozesses wenigstens
- die Temperatur der Schweißelektroden, und/oder
- den Abnutzungsgrad der Schweißelektroden, und/oder
- die Gesamtdauer der Schweißzeit, während der seit einer vorangegangenen Umpolung der Gleichspannung mit unveränderter Polarität geschweißt worden ist, und/oder
- die Anzahl der Schweißverbindungen, insbesondere Schweißpunkte oder Schweißnähte, die seit einer vorangegangen Umpolung der Gleichspannung mit unveränderter Polarität erzeugt worden sind, und/oder
- das Verhältnis der Zeitdauer, während der eine Elektrode bei der Erzeugung einer Mehrzahl von Schweißverbindungen positiv gepolt war zu der Zeitdauer, während der die Elektrode bei der Erzeugung der Mehrzahl von Schweißverbindungen negativ gepolt war, und/oder
- die Dicke und/oder das Material der zu verschweißenden Werkstücke.

Diese Parameter bieten für sich genommen oder in Kombination miteinander eine zuverlässige Grundlage für die Wahl der Polarität an den Elektroden.

Eine andere vorteilhafte Weiterbildung sieht vor, daß die Polarität der Gleichspannung an den Schweißelektroden während der Erzeugung einer Mehrzahl von Schweißverbindungen oder während eines vorbestimmten Zeitintervalles derart gewählt wird, daß die summe der Schweißzeiten, während derer eine Elektrode positiv gepolt ist, im wesentlichen gleich der Summe der Schweißzeiten ist, während der die Elektrode negativ gepolt ist. Bei dieser Ausführungsform werden die Elektroden somit gleichermaßen mit positiver wie mit negativer Polarität "belastet", so daß eine ungleichmäßige Abnutzung besonders zuverlässig vermieden ist.

Eine andere Weiterbildung des erfindungsgemäßen Verfahrens sieht vor, daß über eine mit den Steuermitteln verbundene Eingabeeinrichtung wenigstens ein Parameter des Schweißprozesses extern eingebbar ist. Bei dieser Ausführungsform können beispielsweise die Dicke und/oder das Material der zu verschweißenden Werkstücke extern durch eine Bedienperson eingegeben und für sich genommen oder im Zusammenhang mit weiteren gemessenen Parametern als Grundlage für die Wahl der Polarität der Gleichspannung an den Schweißelektroden herangezogen werden.

Der Abnutzungsgrad der Schweißelektroden kann auf beliebige geeignete Weise ermittelt werden. Gemäß einer Weiterbildung wird der Abnutzungsgrad der Schweißelektroden durch optische Mittel ermittelt.

Die Temperatur der Schweißelektroden kann auf beliebige geeignete Weise ermittelt werden. Gemäß einer Ausführungsform wird die Temperatur der Schweißelektroden berührungslos gemessen, insbesondere mit Mitteln zur Messung von Infrarotstrahlung, beispielsweise einer Infrarotkamera.

Die Erfindung wird nachfolgend anhand der beigefügten Zeichnung näher erläutert, in deren einziger Figur eine Vorrichtung zur Durchführung des erfindungsgemäßen Verfahrens dargestellt ist.

In der Zeichnung ist eine allgemein mit 2 bezeichnete Vorrichtung zum Widerstandsschweißen von Aluminiumblechen 4, 6 dargestellt, die Schweißelektroden 8, 10 aufweist. Die Schweißelektroden 8, 10 sind mit einer Vorrichtung 12 verbunden, die zur Erzeugung eines Schweiß-Wechselstromes mit im wesentlichen rechteckförmigen positiven und negativen Halbwellen eine umpolbare Gleichspannung an die Schweißelektroden 8, 10 anlegt. Der Aufbau der Vorrichtung 12 ist dem Fachmann allgemein bekannt und wird daher hier nicht näher erläutert.

Erfindungsgemäß wird die Polarität der Gleichspannung an den Schweißelektroden 8, 10 vor bzw. nach jedem Schweißvorgang, beispielsweise vor bzw. nach dem Bilden eines Schweißpunktes, in Abhängigkeit von wenigstens einem während des Schweißprozesses ermittelten Parameter gewählt. Die Wahl der Polarität erfolgt bei dem Ausführungsbeispiel gesteuert durch Steuermittel 14.

Die Steuermittel 14 sind mit Meßmitteln 16 verbunden, die bei diesem Ausführungsbeispiel die Temperatur der Schweißelektroden über Temperatursensoren 18, 20 als Parameter des Schweißprozesses messen und den Steuermitteln 14 zuführen. Zusätzlich zu der Temperatur der Schweißelektroden 8, 10 können die Meßmittel noch beliebige andere geeignete Parameter des Schweißprozesses messen, beispielsweise die Gesamtdauer der Schweißzeit, während der seit einer vorangegangenen Umpolung der Gleichspannung mit unveränderter Polarität geschweißt worden ist, und/oder die Anzahl der Schweißpunkte, die seit einer vorangegangenen Umpolung der Gleichspannung mit unveränderter Polarität erzeugt worden sind, und/oder das Verhältnis der Zeitdauer, während der eine Elektrode bei der Erzeugung einer Mehrzahl von Schweißpunkten positiv gepolt war, zu der Zeitdauer, während der die Elektrode bei der Erzeugung der Mehrzahl von Schweißverbindungen negativ gepolt war. Zusätzlich können die Steuermittel 14 aus den gemessenen Parametern des Schweißprozesses erforderlichenfalls noch weitere Parameter errechnen.

Zur externen Eingabe von Parametern des Schweißprozesses, beispielsweise des Werkstoffes und/oder der Dicke der zu verschweißenden Aluminiumbleche 4, 6, weist die Vorrichtung 2 eine Eingabeeinrichtung 22 in Form einer Tastatur auf, die mit den Steuermitteln 14 verbunden ist.

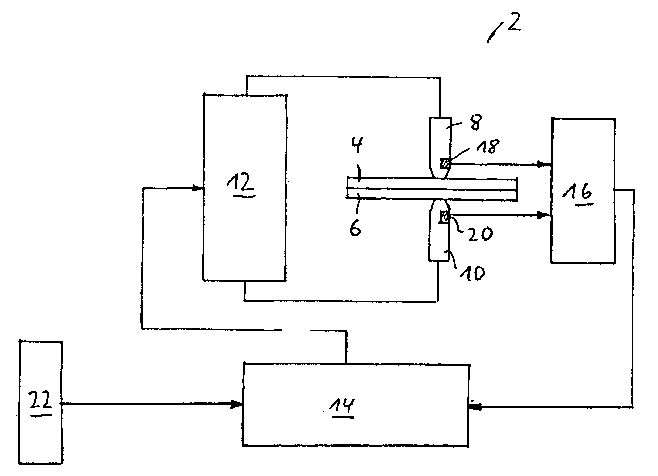

Das erfindungsgemäße Verfahren wird bei diesem Ausführungsbeispiel mit der Vorrichtung gemäß Fig. 2 wie folgt durchgeführt:

Sollen beispielsweise die Aluminiumbleche 4, 6 mit einer Mehrzahl von Schweißpunkten miteinander verbunden werden, so können vor Beginn der Schweißvorgänge über die Eingabeeinrichtung 22 das Material und/oder die Dicke der zu verschweißenden Aluminiumbleche extern eingegeben werden. Daran anschließend wählen die Steuermittel 14 die Polarität der Gleichspannung an den Elektroden 18, 20 und steuern die Vorrichtung 12 derart an, daß diese eine Gleichspannung mit der gewählten Polarität an die Schweißelektroden 8, 10 anlegt, so daß der erste Schweißpunkt erzeugt wird. Bei kalten und noch nicht abgenutzten Schweißelektroden ist die Polarität der Gleichspannung für den ersten Schweißvorgang beliebig.

Während des Schweißvorganges messen die Meßmittel 16 die Temperatur der Schweißelektroden 18, 20. War beispielsweise zunächst die Schweißelektrode 8 positiv gepolt und ergibt die Messung der Temperatur der Schweißelektroden 8, 10, daß sich die Schweißelektrode 8 stärker erwärmt hat als die Schweißelektrode 10 und der Temperaturunterschied zwischen den Schweißelektroden 8, 10 einen vorgegebenen Wert überschritten hat, so steuern die Steuermittel 14 die Vorrichtung 12 derart an, daß diese die Gleichspannung an den Schweißelektroden 8, 10 umpolt, so daß beim Setzen des nächsten Schweißpunktes nunmehr die Schweißelektrode 10 positiv gepolt ist.

Ergibt die Messung der Temperatur der Schweißelektroden 8, 10, daß keine ungleichmäßige Erwärmung der Schweißelektroden 8, 10 aufgetreten ist bzw. ein Temperaturunterschied zwischen den Schweißelektroden 8, 10 einen vorgegebenen Wert nicht überschritten hat, so kann die Polarität der Schweißelektroden 8, 10 unverändert bleiben. Eine Ansteuerung der Vorrichtung 12 durch die Steuermittel 14 zur Umpolung der Gleichspannung erfolgt dann nicht.

In entsprechender Weise wird die Polarität der Schweißelektroden 8, 10 vor jedem Schweißvorgang, also vor dem Setzen jedes Schweißpunktes gewählt. Ist beispielsweise während des Setzens der ersten zehn Schweißpunkte die Polarität der Gleichspannung unverändert geblieben und ergibt eine Messung der Temperatur der Schweißelektroden 8, 10 vor dem Setzen des elften Schweißpunktes, daß ein Temperaturunterschied zwischen den Schweißelektroden 8, 10 einen vorgegebenen Wert überschreitet, so steuern die Steuermittel 14 die Vorrichtung 12 an, die daraufhin die Gleichspannung an den Schweißelektroden 8, 10 umpolt.

Zusätzlich zu der Temperatur der Schweißelektroden 8, 10 oder anstelle der Temperatur können ggf. die oben genannten Parameter des Schweißprozesses sowie beliebige andere geeignete Parameter als Grundlage für die Wahl der Polarität der Gleichspannung an den Schweißelektroden 8, 10 vor bzw. nach jedem Schweißvorgang herangezogen werden.

Mit dem erfindungsgemäßen Verfahren wird eine einseitige Abnutzung der Schweißelektroden 8, 10 zuverlässig vermieden, so daß die Standzeit bzw. Standmenge der Schweißelektroden 8, 10 erhöht ist. Hierdurch sind Rüstzeiten, die durch einen Austausch der Schweißelektroden 8, 10 wegen eines vorzeitigen Verschleißes verursacht sind, verringert, so daß der Schweißprozeß insgesamt kostengünstiger gestaltet ist.

## Patentansprüche

1. Verfahren zum Widerstandsschweißen mit Gleichstrom, bei dem eine an den Schweißelektroden anliegende Gleichspannung umgepolt wird, **dadurch gekennzeichnet,**
**daß** die Wahl der Polarität der Gleichspannung an den Schweißelektroden vor oder nach jedem Schweißvorgang in Abhängigkeit von wenigstens einem während des Schweißprozesses ermittelten Parameter des Schweißprozesses durch Steuermittel gesteuert wird.

2. Verfahren nach Anspruch 1, **dadurch gekennzeichnet, daß** wenigstens ein Parameter des Schweißprozesses gemessen und zur Wahl der Polarität der Gleichspannung an den Schweißelektroden herangezogen wird.

3. Verfahren nach Anspruch 1 oder 2, **dadurch gekennzeichnet, daß** aus wenigstens zwei gemessenen Parametern des Schweißprozesses ein weiterer Parameter errechnet und zur Wahl der Polarität der Gleichspannung an den Elektroden herangezogen wird.

4. Verfahren nach Anspruch 1, 2 oder 3, **dadurch gekennzeichnet, daß** die Parameter des Schweißprozesses wenigstens
- die Temperatur der Schweißelektroden und/oder
- den Abnutzungsgrad der Schweißelektroden und/oder
- die Gesamtdauer der Schweißzeit, während der seit einer vorangegangenen Umpolung der Gleichspannung mit unveränderter Polarität der Schweißelektroden geschweißt worden ist, und/oder
- die Anzahl der Schweißverbindungen, insbesondere Schweißpunkte oder Schweißnähte, die seit einer vorangegangenen Umpolung der Gleichspannung mit unveränderter Polarität erzeugt worden sind,
- und/oder das Verhältnis der Zeitdauer, während der eine Elektrode bei der Erzeugung einer Mehrzahl von Schweißverbindungen positiv gepolt war, zu der Zeitdauer, während der die Elektrode bei der Erzeugung der Mehrzahl von Schweißverbindungen negativ gepolt war, und/oder
- die Dicke und/oder das Material der zu verschweißenden Werkstücke,
umfassen.

5. Verfahren nach einem der vorhergehenden Ansprüche, **dadurch gekennzeichnet, daß** die Polarität der Gleichspannung an den Elektroden während einer Mehrzahl von Schweißvorgängen oder während eines vorbestimmten Zeitintervalles derart gewählt wird, daß die Summe der Schweißzeiten, während derer eine Elektrode positiv gepolt ist, im wesentlichen gleich der Summe der Schweißzeiten ist, während derer die Elektrode negativ gepolt ist.

6. Verfahren nach Anspruch 1, **dadurch gekennzeichnet, daß** über eine mit den Steuermitteln verbundene Eingabeeinrichtung wenigstens ein Parameter des Schweißprozesses extern eingebbar ist.

7. Verfahren nach Anspruch 2, **dadurch gekennzeichnet, daß** der Abnutzungsgrad der Schweißelektroden durch optische Mittel ermittelt wird.

8. Verfahren nach Anspruch 2, **dadurch gekennzeichnet, daß** die Temperatur der Schweißelektroden berührungslos gemessen wird, insbesondere mit Mitteln zur Messung von Infrarotstrahlung, beispielsweise einer Infrarotkamera.

## Claims

1. A method for resistance welding using direct current, in which a direct voltage that is applied to the welding electrodes is commutated,
**characterised in that** the choice of the polarity of the direct voltage at the welding electrodes is controlled by control means before or after each welding operation as a function of at least one parameter of the welding process which was determined during the welding process.

2. A method according to Claim 1,
**characterised in that** at least one parameter of the welding process is measured and is used to select the polarity of the direct voltage at the welding electrodes.

3. A method according to Claim 1 or 2,
**characterised in that** an additional parameter is calculated from at least two measured parameters of the welding process and is used to select the polarity of the direct voltage at the welding electrodes.

4. A method according to Claim 1, 2 or 3,
**characterised in that** the parameters of the welding process include at least
- the temperature of the welding electrodes and/or
- the degree of wear of the welding electrodes and/or
- the total duration of the welding time during which welding has been carried out with an unchanged polarity of the welding electrodes since a previous commutation of the direct voltage, and/or
- the number of weld joints, in particular weld points or weld seams, which have been produced since a previous commutation of the direct voltage with unchanged polarity,
- and/or the ratio of the duration during which the polarity of an electrode was positive during the production of a majority of weld joints to the duration during which the polarity of the electrode was negative during the production of the majority of weld joints, and/or
- the thickness and/or the material of the workpieces to be welded.

5. A method according to one of the preceding Claims,
**characterised in that** the polarity of the direct voltage at the electrodes during a majority of welding operations or during a predetermined time interval is chosen in such a manner that the sum of the welding periods during which the polarity of an electrode is positive is substantially equal to the sum of the welding periods during which the polarity of the electrode is negative.

6. A method according to Claim 1,
**characterised in that** at least one parameter of the welding process can be externally inputted via an input device connected to the control means.

7. A method according to Claim 2,
**characterised in that** the degree of wear to the welding electrodes is determined by optical means.

8. A method according to Claim 2,
**characterised in that** the temperature of the welding electrodes is measured in contactless manner, in particular with means for the measurement of infrared radiation, for example an infrared camera.

## Revendications

1. Procédé de soudage par résistance en courant continu, dans lequel on inverse la polalrité de la tension continue qui s'applique aux électrodes de soudage, **caractérisé en ce que**
le choix de la polarité de la tension continue aux électrodes de soudage est commandé par des moyens de commande, avant ou après chaque opération de soudage en fonction d'au moins un paramètre du processus de soudage déterminé pendant le processus de soudage.

2. Procédé selon la revendication 1, **caractérisé en ce qu'**au moins un paramètre du processus de soudage est mesuré et utilisé pour choisir la polarité de la tension continue qui s'applique aux électrodes de soudage.

3. Procédé selon la revendication 1 ou 2, **caractérisé en ce qu'**à partir d'au moins deux paramètres mesurés du processus de soudage, on calcule un autre paramètre et on l'utilise pour choisir la polarité de la tension continue aux électrodes.

4. Procédé selon la revendication 1, 2 ou 3, **caractérisé en ce que** les paramètres du processus de soudage comprennent au moins
- la température des électrodes de soudage et/ou
- le degré d'usure des électrodes de soudage et/ou
- la durée totale du temps de soudage pendant lequel on a soudé avec une polarité inchangée des électrodes de soudage, depuis une inversion de polarité précédente de la tension continue, et/ou
- le nombre de liaisons de soudure, en particulier des points de soudure ou des cordons de soudure, qui ont été réalisés avec une polarité inchangée, depuis une inversion de polarité précédente de la tension continue,
- et/ ou le rapport entre la durée pendant laquelle une électrode était de polarité positive lors de la réalisation d'une pluralité de liaisons de soudure, et la durée pendant laquelle l'électrode était de polarité négative lors de la réalisation d'une pluralité de liaisons de soudure, et/ou
- l'épaisseur et/ou le matériau des pièces à souder.

5. Procédé selon l'une des revendications précédentes, **caractérisé en ce que** la polarité de la tension continue aux électrodes pendant une pluralité d'opérations de soudage ou pendant un intervalle de temps prédéterminé est choisie de manière que la somme des temps de soudage pendant lesquels une électrode est de polarité positive est sensiblement égale à la somme des temps de soudage pendant lesquels l'électrode est de polarité négative.

6. Procédé selon la revendication 1, **caractérisé en ce qu'**au moins un paramètre du processus de soudage peut être introduit de manière externe par un dispositif de saisie connecté aux moyens de commande.

7. Procédé selon la revendication 2, **caractérisé en ce que** le degré d'usure des électrodes de soudage est déterminé par des moyens optiques.

8. Procédé selon la revendication 2, **caractérisé en ce que** la température des électrodes de soudage est mesurée sans contact, en particulier avec des moyens de mesure au rayonnement infrarouge, par exemple au moyen d'une caméra infrarouge.
